# EUROPÄISCHE PATENTSCHRIFT

(11) **EP 1 926 772 B1**
(45) Veröffentlichungstag und Bekanntmachung des Hinweises auf die Patenterteilung: **18.11.2009**
(21) Anmeldenummer: 06791819.3
(22) Anmeldetag: 04.09.2006
(51) Int. Cl.: C08K 7/08

(54) **VERFAHREN ZUR HERSTELLUNG VON VERBUNDWERKSTOFFEN**
METHOD FOR PRODUCING COMPOSITE MATERIALS
PROCEDE DE FABRICATION DE MATERIAUX COMPOSITES

(30) Priorität: 05.09.2005 DE 102005042138
(43) Veröffentlichungstag der Anmeldung: 04.06.2008
(73) Patentinhaber: Deutsches Wollforschungsinstitut an der RWTH Aachen e.V., 52074 Aachen (DE)
(72) Erfinder: SPIEGELBERG, Susanne, 52066 Aachen (DE); ALTEHELD, Armin, 55543 Bad Kreuznach (DE); ZHU, Xiaomin, 52074 Aachen (DE); PETER, Karin, 52078 Aachen (DE); MÖLLER, Martin, 52070 Aachen (DE)
(74) Vertreter: Reitstötter - Kinzebach
(86) Internationale Anmeldenummer: PCT/EP2006/008614
(87) Internationale Veröffentlichungsnummer: WO 2007/028563

(56) Entgegenhaltungen:
- EP-A- 0 280 085
- WO-A-2004/058859

## Beschreibung

Die vorliegende Erfindung betrifft ein Verfahren zur Herstellung von Verbundwerkstoffen aus thermoplastischen Polymeren und (Halb)metalloxiden, insbesondere Siliziumdioxid, worin zumindest ein Teil des (Halb)metalloxids in einer nanodispersen Verteilung in dem Polymeren vorliegt (Nanokomposite bzw. Nanoverbundstoffe). Die Erfindung betrifft die nach diesem Verfahren erhältlichen Verbundwerkstoffe und deren Verarbeitung zu Formkörpern.

Nanokomposite, d.h. Verbundstoffe auf Polymerbasis, die in der Polymermatrix einen anorganischen Bestandteil, z.B. ein anorganisches (Halb)metalloxid, in Form dispergierter Nanopartikel, d.h. Partikel mit Abmessungen unterhalb 1 µm und insbesondere unterhalb 500 nm (im Folgenden auch nanoskalige Partikel), enthalten, besitzen aufgrund der großen Oberfläche der Nanopartikel ein hohes Potential hinsichtlich ihrer chemischen, physikalischen und mechanischen Eigenschaften, die nicht durch milli- bzw. mikroskalige Dispersionen konventioneller anorganischer Bestandteile erreicht werden können (R.P. Singh, et al., J. Mater. Sci. 2002, 37, 781).

Die bislang bekannten Verfahren zur Herstellung von anorganisch-organischen Nanokompositen basieren auf direkter Vermischung von Nanopartikeln mit einem Polymer in Lösung oder Schmelze, *in situ* Polymerisation in Gegenwart von Nanopartikeln, dem Einsatz von Schichtsilikaten und Sol-Gel-Techniken.

Die von Kashiwagi, T; et al., Proceedings of the Nanocomposites-Delivering New Value to Polymers, San Diego, CA, 2002 beschriebene direkte Vermischung des nanoskaligen anorganischen Bestandteils mit einer. Lösung der Polymere ist eine einfache Methode, die jedoch auf lösliche Polymere beschränkt ist. Zusätzlich müssen sehr große Mengen an Lösungsmitteln in diesem Verfahren eingesetzt werden.

Demgegenüber ist die von Garcia, M.; et al., Polymers for Advanced Technologies 2004, 15, 164 beschriebene direkte Vermischung von Siliziumdioxid-Nanopartikeln in der Polymerschmelze umweltfreundlicher, da keine Lösungsmittel benötigt werden. Aufgrund der meist hohen Agglomeration der Nanopartikel und der dadurch notwendigen enorm hohen Scherkräfte ist eine Feinverteilung der Nanopartikel in größerer Menge kaum möglich. Bei agglomeratfreien Nanopartikeln ist die maximal einbringbare Menge durch das rasche Ansteigen der Viskosität der Schmelze zusätzlich beschränkt.

Verschiedentlich wurde über die Herstellung von Nanoverbundstoffen durch Polymerisation organischer Monomere in Gegenwart anorganischer Nanopartikel berichtet (sogenannte *in situ* Nanokomposit-Herstellung). So beschreiben M. C. Kuo et al. (Materials Chemistry and Physics 2005, 90(1), 185) die Herstellung mechanisch verstärkter Nanoverbundstoffe durch Herstellung eines Polyetheretherketons (PEEK) in Gegenwart von SiO₂oder Al₂O₃-Nanopartikeln. A. Maity et al. (Joumal of Applied Polymer Science 2004, 94(2), 803) beschreiben die Herstellung von Poly(N-vinylcarbazol)-Polyanilin in Gegenwart von Nanopartikein, wobei entsprechende Nanoverbundstoffe erhalten werden. Y. Liao et al. (Polymer International 2001, 50(2), 207) beschreiben die Polymerisation von Butylmethacrylat in Gegenwart von Nanopartikeln unter Erhalt von Nanokompositen auf der Basis von Poly(butylmethacrylat).

Ein großer Nachteil der *in situ* Nanokomposit-Herstellung ist die dabei auftretende Agglomeratbildung der verwendeten Nanopartikel, so dass inhomogene Produkte entstehen. Dadurch kann der Vorteil der Nanopartikel, durch ihre große Oberfläche ausgedehnte Grenzflächen mit dem Polymer zu bilden, nicht genutzt werden. Beim Einsatz pulvriger Nanofüllstoffe besteht aufgrund der geringen Partikelgröße zusätzlich ein hohes Gesundheitsrisiko während der Compoundierung aufgrund der auftretenden Staubbildung und der Lungengängigkeit der Nanopartikel.

Für die Herstellung von polymerbasierten Nanoverbundstoffen unter Verwendung von Schichtsilikaten werden in der Literatur zwei Methoden beschrieben. Im Rahmen der ersten Methode wird das Polymer mit Tonmineralien vermischt (siehe Yuan-Hsiang Yu et al., Polymer 2003, 44(12), 3553). Als Tonmineralien werden Smektite wie Montmorillonit (Mₓ(Al₄₋ₓmgₓ)Si₈O₂₀(OH)₄) eingesetzt. Hierbei stellt M ein austauschbares monovalentes Kation und x den Grad der isomorphen Substitution dar. Zuerst erfolgt die Interkalierung von organischen Molekülen in die Schichtstruktur und dann die Exfolierung, wobei die einzelnen Schichten voneinander getrennt werden. Das so erhaltene Material wird dann in einer Polymermatrix dispergiert. Dabei ist zu beachten, dass das Ergebnis der Exfolierung durch mechanische Belastungen stark beeinflusst wird.

Die US 6,835,766 beschreibt die Herstellung von Polymer-Ton-Verbundstoffen durch Verpressen der Bestandteile. So werden z.B. Polyethylenoxid und Montmorillonit-Mineralien zunächst in Pulverform miteinander gemischt und anschließend bei einer Temperatur unterhalb der Glas- oder Schmelztemperatur des Polymers gepresst.

R.A. Vaia et al. (Chem. Mater. 1993, 5, 1694. und Chem. Mater. 1996, 8, 2628) beschreiben die direkte Interkalierung von Makromolekülert in das Gastsilikat.

Die US 2004/214921 beschreibt die Herstellung von Polymer-Schichtsilikat-Verbundstoffen, bestehend aus Schichtsilikaten der Gruppe der hydrophilen Organo-Schichtsilikate, einem Polyolefin und einem polymeren Tensid. Hierbei wird zunächst das polymere Tensid mit dem Schichtsilikat vermischt, wobei letzteres auf der Oberfläche des Schichtsilikats adsorbiert und so zu Exfolierung des Schichtsilikats beim Verpressen mit dem Polyolefin führt.

Bei der zweiten Methode werden zunächst organische Verbindungen in die Schichtsilikate interkaliert. Anschließend wird in Gegenwart des so erhaltenen Materials eine Polymerisation der Monomere, welche den Polymerbestanteil des Verbundwerkstoffs bilden, durchgeführt. Die Interkalierung organischer Verbindungen in die Schichtsilikate kann z.B. mit organischen Ammonium-Verbindungen oder passenden Monomeren erreicht werden (siehe z.B. US 2004/260000).

Die WO 2001/012678 beschreibt die Herstellung von Polyamid-Verbundstoffen durch *in-situ* Polymerisation einer Caprolactam-Schmelze, welche exfolierte Schichten von Montmorillonit dispergiert enthält.

Die WO 99147598 beschreibt die Herstellung von Nanokompositen auf Polyolefin-Basis. Hierbei wird zunächst ein spezieller Ton in Wasser gequollen. Nach anschließender Gefriertrocknung zur Entfernung von Wasser bilden sich einzelne Silkatschichten mit Abmessungen im Nanometerbereich, die in unpolaren organischen Lösungsmitteln dispergiert werden. Die Nachbehandlung mit Methylalumoxan und die langsame Zugabe eines Ziegler-Natta Katalysators führt zur Bildung eines Komplexes, welcher die Stabilität der Dispersion fördert. Die Nanokomposite werden anschließend durch direkte *in situ* Polymerisation von Olefinen oder Styrol in Gegenwart der Nanopartikel hergestellt.

Die gewünschten Eigenschaften der Nanokomposite, wie verbesserte mechanische Eigenschaften, erhöhte Abriebfestigkeit, bessere Barrierefunktion oder geringere Entflammbarkeit können jedoch nur dann erreicht werden, wenn die exfolierten SilikatSchichten homogen in der Polymermatrix verteilt vorliegen. Die hier genannten Verfahren unter Anwendung der in-sifu-Potymerisation sind diesbezüglich problematisch, da sie zu einer inhomogenen Verteilung der Silikatschichten im Verbundstoff führen. Die in der Schmelze hergestellten Nanoverbundstoffe haben den Nachteil, dass nur polare Moleküle den Interkalierungsprozess einleiten können und die Schmelzviskosität mit ansteigendem Volumenanteil an Tonmineralien sehr stark ansteigt bis zu einem Grenzwert, der eine weitere Verarbeitung in der Schmelze unmöglich macht.

Die WO 021064664 beschreibt wasserfrei hydrolysierbare Sol-Gel-Systeme, bei denen man in einem Gemisch aus (Halb)metallalkoxiden, z.B. Tetraalkoxysilane wie Tetraethoxysilan, oder (Fluor)alkyltrialkoxysilane wie Octyltriethoxysilan oder Fluoralkyltriethoxysilan und wasserfreien Carbonsäuren z.B. Essigsäure, Ameisensäure, Fluorcarbonsäuren, Acetessigsäure oder Bernsteinsäure oder Carbonsäureanhydriden durch Zugabe geeigneter Katalysatoren wie Mineralsäuren, insbesondere Salzsäure eine Polymerisation unter Bildung von polymeren Polyalkyl(halb)metallaten und des entsprechenden Alkylcarbonsäureesters bewirkt. In dieser Lösung sind unpolare Stoffe die Poly(methylmethacrylat) löslich, die dann als Beschichtung auf eine Oberfläche aufgebracht werden können. Eine Variation des Verfahrens stellt die Verwendung von Carbonsäuren mit einer funktionellen Gruppe aus der Gruppe der Acrylsäure, Methacrylsäure, Maleinsäure oder Crotonsäure dar. Auf diese Weise wird ein Gemisch erhalten, welches radikalisch oder unter dem Einfluss von UV-Strahlung vernetzt und ein massives duroplastisches Nanokomposit bildet. Nachteile dieses Verfahrens sind die sehr langen Reaktionszeiten von 20 Tagen. Zudem werden große Mengen an Carbonsäureester gebildet, die aus dem Kompositmaterial entfernt werden müssen. Das Verfahren ist zudem auf Polymeren beschränkt, die in den Carbonsäureestern löslich sind.

Die WO 2004/058859 beschreibt die Herstellung von flüssigen Polyalkyl(halb)-metallaten des Siliziums, Titans, Zirkons oder Hafniums durch Umsetzung von entsprechenden (Halb)metallalkoholaten mit dem Anhydrid einer aliphatischen C₂-C₄-Carbonsäure und Entfernen des dabei gebildeten Esters. Die so erhaltenen flüssigen Produkte können als flüssiges Additiv in Schmelzen thermoplastischer Polymere eingearbeitet werden. Als nachteilig erweist sich, dass die Bildung einer (Halb)metalloxid-Phase unter diesen Bedingungen nur sehr langsam verläuft und keiner Kontrolle unterliegt. Durch lange Reaktionszeiten und hohe Temperaturen sind Phasenseparationsprozesse möglich, die eine gleichmäßige Verteilung der nanoskaligen Partikel in der Polymerphase verhindern und damit nur zu schlecht reproduzierbaren Ergebnissen führen.

Der vorliegenden Erfindung liegt daher die Aufgabe zugrunde, ein Verfahren zur Herstellung von anorganisch-organischen Nanoverbundwerkstoffen auf Basis thermoplastischer Polymere bereitzustellen, das die Nachteile des Standes der Technik überwindet und das insbesondere die homogene Einarbeitung größerer Mengen an oxidischen Bestandteilen mit Abmessungen im Nanometerbereich in eine thermoplastische Polymermatrix ermöglicht, ohne dass es hierzu größerer Mengen an organischen Lösungsmitteln bedarf.

Es wurde gefunden, dass diese und weitere Aufgaben durch das im Folgenden beschriebene Verfahren überraschenderweise gelöst werden.

Dementsprechend betrifft die vorliegende Erfindung ein Verfahren zur Herstellung von Verbundwerkstoffen aus wenigstens einem thermoplastischen Polymeren und wenigstens einem in dem Polymer nanodispers verteilten (Halb)metalloxid, das die folgenden Schritte umfasst:
i. Einarbeiten wenigstens eines flüssigen Polyalkyl(halb)metallats in eine Schmelze wenigstens eines thermoplastischen Polymeren und
ii. kontrollierte Kondensation des Polyalkyl(halb)metallats in der Polymerschmelze unter Ausbildung einer in dem Polymeren nanodispers verteilten (Halb)Metalloxid-Phase durch Zugabe wenigstens einer die Kondensation katalysierenden Substanz (Katalysator).

Die vorliegende Erfindung beruht auf einem weitestgehend wasser- und lösungsmittelfreien Sol-Gel-Verfahren, welches die *in situ* Bildung von (Halb)metalloxid-Phasen in Form fein dispergierter Nanopartikel in Polymerschmelzen und/oder nanopartikuläre Schichten auf daraus hergestellten Formkörpern ermöglicht. Sie stellt somit ein neues Verfahren zur Herstellung von vielfältigen Nanoverbundwerkstoffen bereit.

Durch das erfindungsgemäße Verfahren erhält man Verbundwerkstoffe auf Basis thermoplastischer Polymere, die wenigstens eine in dem(den) Polymeren dispers verteilte (Halb)metalloxid-Phase aufweisen, wobei die (Halb)metalloxid-Phase nanodispers verteilt in einer von dem(den) Polymeren gebildeten Polymermatrix vorliegt. Im Unterschied zu den bekannten Verfahren ist die Verteilung der nanodispersen (Halb)metalloxid-Phase im Wesentlichen homogen, d.h. die nanodisperse Halbmetalloxid-Phase ist im Wesentlichen gleichmäßig in der Polymermatrix verteilt.

Gleichzeitig können geringe Mengen der nanodispersen (Halb)metalloxid-Phase aufgrund von Entmischungsvorgängen in den Oberflächenbereichen der Polymermatrix angereichert vorliegen und so dem Nanoverbundstoff nach der Kondensation eine erhöhte Oberflächenhärte verleihen. Die Ausbildung einer dünnen Oberflächenschicht der (Halb)Metalloxid-Phase ist vermutlich auf eine Migration (Segregation) des Polyalkyl(halb)metallats in die Oberflächenbereiche und anschließende Kondensation des. Polyalkyl(halb)metallats auf der Oberfläche der aus der so modifizierten Polymerschmelze hergestellten Formkörper unter dem Einfluss des Katalysators und Luftfeuchtigkeit zurückzuführen. Die Ausbildung dieser dünnen Oberflächenschicht lässt sich durch das erfindungsgemäße Verfahren gezielt steuern, wie weiter unten beschrieben wird, und ist daher ebenfalls Gegenstand der vorliegenden Erfindung.

Unter einer nanodispersen Verteilung der (Halb)metalloxid-Phase versteht man eine Verteilung sehr kleiner, diskreter Bereiche der (Halb)metalloxid-Phase in der kohärenten Polymermatrix mit Abmessungen im Nanometer-Bereich. In der Regel weisen die Phasenbereiche der (Halb)metalloxidphase Abmessungen unterhalb 500 nm und insbesondere unterhalb 200 nm auf.

Die durch das erfindungsgemäße Verfahren erhältlichen Verbundwerkstoffe sind neu und ebenfalls Gegenstand der vorliegenden Erfindung.

Die Einarbeitung des flüssigen Polyalkyl(halb)metallats in die Schmelze des wenigstens einen thermoplastischen Polymeren kann in üblicher Weise durch Vermischen der Komponenten in hierfür üblichen Mischvorrichtungen für Polymerschmelzen wie Mischwalzwerken, Knetern, Extrudern, einschließlich Einzel- und Doppelschneckenextrudern, und dergleichen erfolgen. Geeignete Mischvorrichtungen sind dem Fachmann hinlänglich bekannt z.B. aus A. Echte, Handbuch der technischen Polymerchemie, VCH, Weinheim 1993, S. 111 120.

Das Einarbeiten kann grundsätzlich durch Zugabe von organischen Lösungsmitteln, welche die Polymere zu lösen oder zu quellen vermögen, gefördert werden. Dies ist jedoch nicht erforderlich. Vorteilhafterweise werden die Polyalkyl(halb)metallate daher ohne oder nur mit geringen Mengen an organischen Lösungsmitteln (< 10 Gew.%, bezogen auf das eingesetzte Polyalkyl(halb)metallat) in die Polymerschmelze eingearbeitet.

In der Regel erfolgt das Einarbeiten bei Temperaturen oberhalb der Erweichungs- bzw. Schmelztemperatur des thermoplastischen Polymeren, z.B. bei Temperaturen, die wenigstens 10 K und insbesondere wenigstens 20 K oberhalb der Erweichungs-/Schmelztemperatur liegen und typischerweise bei Temperaturen oberhalb 100°C, insbesondere im Bereich von 150°C bis 300°C.

Der Begriff Polyalkyl(halb)metallat steht synonym für Ester von (Hetero)polysäuren von Metallen. Dementsprechend handelt es sich hierbei um Oligomere oder polymere Kondensationsprodukte von (Halb)metallalkoxiden, wie sie im Stand der Technik-verschiedentlich beschrieben werden. Beispiele für erfindungsgemäße Polyalkyl(halb)metallate sind Kondensationsprodukte von (Halb)metallalkoxylaten des Siliziums, Bors, Titans, Hafniums oder Zirkons. Derartige Konderisationsprodukte werden beispielsweise in der WO 2004/058859 beschrieben, auf deren Offenbarung hiermit Bezug genommen wird.

Bevorzugt sind Kondensationsprodukte von Alkoholaten der Formel **I**

M(OR)₄ (I)

worin R gleich oder verschieden sein kann und C₁-C₁₈-Alkyl, vorzugsweise C₁-C₄-Alkyl und insbesondere Ethyl bedeutet und M für Si, Ti, Zr oder Hf und insbesondere für Si steht, sowie Kondensationsprodukte von Alkoholaten der Formel 1

R^{b}-M(OR^{a})₃ (II)

worin M die zuvor genannte Bedeutung aufweist, R^{a} gleich oder verschieden sein kann und C₁-C₁₈-Alkyl, vorzugsweise C₁-C₄-Alkyl und insbesondere Ethyl- bedeutet, R^{b} für Alkyl, Alkoxy mit mehr als 4 C-Atomen, Alkenyl, Halogenalkyl, Alkoxyalkyl, Cycloalkyl, Phenyl oder Phenylalkyl steht, wobei die Cycloalkyl- und Phenylringe der drei letztgenannten Gruppen auch 1 bis 5 Substituenten tragen können, die z.B. unter Halogen, C₁-C₄-Akyl, C₁-C₄-Halogenalkyl, C₁-C₄-Alkoxy und dergleichen ausgewählt sind, und Cokondensationsprodukte von Alkoholaten der Formel 1 mit Alkoholaten der Formel II, III und/oder IV

(R^{c})₂M (OR^{a})₂ (III)

(R^{d})₃M(OR^{a}) (IV)

worin M die zuvor genannte Bedeutung aufweist, R^{a} die für Formel II angegebene Bedeutung aufweist und R^{c} und R^{d} jeweils gleich oder verschieden sein können und eine der für R^{b} angegebenen Bedeutungen aufweisen.

Kondensationsprodukte von Alkoholaten der Formel II sowie Cokondensationsprodukte von Alkoholaten der Formel mit Alkoholaten der Formeln II, III und/oder IV werden im . Folgenden auch als modifizierte Polyalkyl(halb)metallate bezeichnet.

Hier und im folgenden steht Alkyl für einen gesättigten, linearen oder verzweigten aliphatischen Kohlenwasserstoffrest mit in der Regel 1 bis 20 C-Atomen, z.B. für Methyl, Ethyl, n-Propyl, Isopropyl, n-Butyl, 2-Butyl, n-Hexyl, n-Octyl, 2-Ethylhexyl, Nonyl, Decyl, Dodecyl, Tridecyl, Tetradecyl, Hexadecyl, Octadecyl und dergleichen.

Hier und im Folgenden steht Alkenyl für einen ein oder mehrfach ungesättigten, linearen oder verzweigten aliphatischen Kohlenwasserstoffrest mit in der Regel 2 bis 20 C-Atomen. z.B. Ethenyl, Propen-1-yl, Propen-2-yl und dergleichen.

Alkoxy steht für einen Alkylrest, wie vorstehend definiert, der über ein Sauerstoffatom gebunden ist, z.B. für Methoxy, Ethoxy, n-Propoxy, n-Butoxy, tert.-Butoxy und dergleichen.

Alkoxyalkyl steht für einen Alkylrest mit vorzugsweise 1 bis 4 C-Atomen, der eine Alkoxygruppe mit vorzugsweise 1 bis 4 C-Atomen trägt.

Halogenalkyl steht für eine Alkylgruppe, wie vorstehend definiert, worin die Wasserstoffe teilweise oder vollständig durch Halogenatome, insbesondere durch Chlor und/oder Fluoratome ersetzt sind.

Cycloalkyl steht für einen cycloaliphatischen Kohlenwasserstoffrest mit in der Regel 5 bis 10 C-Atomen wie Cyclopentyl, Cyclohexyl, Cyclooctyl, Bicycloheptyl und dergleichen.

Vorzugsweise weist das flüssige Polyalkyl(halb)metallat ein zahlenmittleres Molekulargewicht von wenigstens 1000 Dalton, insbesondere wenigstens 1500 Dalton und besonders bevorzugt wenigstens 2000 Dalton auf. Vorteilhafterweise wird das zahlenmittlere Molekulargewicht einen Wert von 20000 Dalton, insbesondere 15000 Dalton nicht überschreiten.

Vorteilhafterweise handelt es sich bei den Polyalkyl(halb)metallaten um verzweigte Oligomere oder Polymere. Bevorzugt sind insbesondere Polyalkyl(halb)metallate, die einen Verzweigungsgrad nach Frey im Bereich von 0,2 bis 0,8 und insbesondere im Bereich von 0,3 bis 0,7 aufweisen. Der Verzweigungsgrad DB nach Frey (siehe D.Hölter, A.Burgath, H.Frey, Acta Polym. 1997,48, S. 30) ist durch die in WO 2004/058849 auf S. 11 angegebene Formel definiert, auf die hiermit Bezug genommen wird.

Vorteilhafterweise weist das flüssige Polyalkyl(halb)metallat bei Raumtemperatur eine Viskosität unterhalb 100000 Pa.s, insbesondere unterhalb 50000 Pa·s und speziell nicht mehr als 5000 Pa.s, z.B. im Bereich von 0,01 bis 5000 Pa·s auf.

Bevorzugt sind weiterhin Polyalkyl(halb)metallate, die keine nachweisbaren (Halb)Metall-gebundenen OH-Gruppen aufweisen.

Insbesondere handelt es sich bei dem flüssigen Polyalkyl(halb)metallat um ein flüssiges, insbesondere hoch verzweigtes Poly[alkylsilikat], z.B. ein Poly[(C₁₋₁₈-alkyl)silikat]. d.h. um ein flüssiges, insbesondere hoch verzweigtes Kondensationsprodukt eines . Tetraalkylsilikats, z.B. eines Tetra-C₁₋₁₈alkylsilikats, insbesondere eines Tetra-C₁-C₄-silikats (Verbindung I mit M = Si), oder um ein modifiziertes, flüssiges Poly[(C₁₋₈-alkyl)silikat], d.h. um ein flüssiges Cokondensationsprodukt eines Tetra-C₁₋₁₈-alkylsilikats mit wenigstens einer der vorgenannten Verbindungen II, IIIoder IV, wobei M in den Formeln II, III und IV insbesondere für Silizium steht.

Besonders bevorzugt handelt es sich bei dem Polyalkyl(halb)metallat um ein Kondensationsprodukt der Verbindungen 1 oder um ein Cokondensationsprodukt wenigstens einer Verbindung I mit wenigstens einer weiteren Verbindung II, IIIund/oder IV, das durch Umsetzung dieser Verbindungen mit dem Anhydrid einer aliphatischen C₂-C₄-Carbonsäure wie Essigsäureanhydrid und Entfernen des bei der Reaktion entstandenen C₁-C₄-Alkylesters der aliphatischen C₂-C₄-Carbonsäure unter den in WO 20041058859 angegebenen Bedingungen hergestellt wurde.

üblicherweise wird man das flüssige Polyalkyl(halb)metallat in einer Menge von 0,1 bis 50 Gew.%, insbesondere in einer Menge von 1 bis 40 Gew.-% und speziell in einer Menge von 1 bis 30 Gew.%, bezogen auf das thermoplastische Polymer einsetzen.

Bezüglich der thermoplastischen Polymere bestehen grundsätzlich keine Einschränkungen. Geeignet sind beispielsweise Polyolefine wie Polyethylen, einschließlich LDPE, HDPE und LLDPE, Polypropylen, Polystyrole, Poly(meth)acrylsäureester wie Polybutylacrylat, Polymethylmethacrylate, Polyacrylnitril, Polycarbonate, Polyarylenether, Polyarylenetherketone einschließlich PEK, PEEK, PEKK, PEEKK, PEKEKK, PEEKEK und PEEEK, Polyarylenethersulfone, aliphatische und aromatische Polyamide wie Nylon 6, Nylon 6,6, aliphatische und aromatische Polyester, Polyoxymethylen und dergleichen.

Erfindungsgemäß erfolgt in dem Schritt ii. eine Umwandlung des Polyalkyl(halb)metallats in eine nanopartikuläre (Halb)metalloxid-Phase. Die Umwandlung wird vermutlich durch Anwesenheit von Wasser, z.B. Wasserspuren aus der Umgebung, zusammen mit den für das Aufschmelzen des Polymeren erforderlichen hohen Temperaturen bewirkt und durch die Anwesenheit des Katalysators bezüglich Zeit und Geschwindigkeit in einer Weise kontrolliert, die eine gleichmäßige Ausbildung der nanodispersen (Halb)metalloxid-Phase in der Polymermatrix bewirkt.

Durch gezielte Steuerung der Reaktionsgeschwindigkeit der Kondensation in Richtung einer langsamen Kondensation, z.B. durch Auswahl des Katalysators und ggf. der Temperatur, sowie durch den Ausschluss von Wasser lässt sich der Anteil des an die Oberfläche migrierten Polyalkyl(halb)metallats vergrößern und die Ausbildung einer dünnen Oberflächenschicht aus einer nanopartikulären (Halb)metalloxid-Phase nach Kondensation des Polyalkyl(halb)metallats fördern.

Man kann den Katalysator hierzu separat oder zusammen mit dem Polyalkyl(halb)metallat in die Polymerschmelze einarbeiten. Vorzugsweise wird man jedoch den Katalysator als Mischung mit dem Polyalkyl(halb)metallat einsetzen. Die Katalysatoren werden vorteilhaftervveise in einer Menge von 0,01 bis 10 Gew.-%, insbesondere 0,1 bis 5 Gew.%, bezogen auf das Pölyalkyl(halb)metallat eingesetzt.

Typischerweise liegen die für die Umwandlung erforderlichen Temperaturen oberhalb 150°C, insbesondere oberhalb 180°C, z.B. im Bereich von 180 bis 300°C.

Die Kondensation des flüssigen Polyalkyl(halb)metallats kann durch Katalysatoren.unterschiedlichen Typs mit und ohne Wasser kontrolliert werden. Typischerweise reichen Wasserspuren aus der Umgebung aus. Man kann jedoch auch geringe Wassermengen zusetzen oder die Kondensation unter Ausschluss von Wasser bewirken.

Geeignete Katalysatoren umfassen saure Substanzen, einschließlich Lewis-Säuren, basische Substanzen und sog. Umesterungskatalysatoren.

Gemäß einer ersten Ausführungsform der Erfindung wird die Kondensation des flüssigen Polyalkyl(halb)metallats durch Zugabe einer Brönsted- oder Lewis-Säure bewirkt, wobei letztere bevorzugt sind. Die Brönsted-Säure sowie die Lewis-Säure kann als solche oder in Form einer Substanz zugegeben werden, die eine derartige Säure freisetzt.

Beispiele für geeignete Brönsted-Säuren sind C₁-C₄-Carbonsäuren wie Essigsäure oder Ameisensäure, Salzsäure sowie organische Sulfonsäuren wie Benzolsulfonsäure, p-Toluolsulfonsäure, Methansulfonsäure und Trifluormethansulfonsäure (Triflicsäure).

Vorzugsweise ist der Katalysator unter Lewis-Säuren und Substanzen, welche Lewissäuren freisetzen, ausgewählt. Beispiele für die Lewis-Säuren und Substanzen, welche Lewissäuren freisetzen, sind Borhalogenide wie Bortrifluorid und Bortrichlorid, Bromide und Chloride des Phosphors wie Phosphortrichlorid, Phosphortribromid, Phosphorpentabromid und Phosphorpentachlorid, weiterhin Aluminiumtrichlorid, Aluminiumtribromid, Chloride von Antimon, Eisen, Zink oder Zinn, wie SbCl₅, SnCl₄, FeCl₃ oder ZnCl₂.

Bevorzugte saure Katalysatoren sind organische Sulfonsäuren wie p-Toluolsulfonsäure und Trifluoromethansulfonsäure, Bortrifluorid, Chloride des Bors, Aluminiums, Phosphors, Antimons, Eisens, Zinks oder Zinns.

Derartige saure Katalysatoren werden vorteilhafterweise in einer Menge von 0,01 bis 10 Gew.%, insbesondere 0,1 bis 5 Gew.%, bezogen auf das Polyalkyl(halb)metallat eingesetzt.

Grundsätzlich kann man den Katalysator separat oder zusammen mit dem Polyalkyl(halb)metallat in die Polymerschmelze einarbeiten. Im Falle saurer Katalysatoren wird man den Katalysator vorzugsweise als Mischung mit dem Polyalkyl(halb)metallat einsetzen.

Gemäß einer zweiten Ausführungsform der Erfindung wird die Kondensation des flüssigen Polyalkyl(halb)metallats durch Zugabe einer Base, vorzugsweise in Kombination mit Wasser katalysiert. Als Basen kommen insbesondere Ammoniak, Metallhydroxide, insbesondere Alkalimetallhydroxide wie Natrium- oder Kaliumhydroxid, Erdalkalimetallhydroxide wie Magnesiumhydroxid oder Aluminiumhydroxid, organische Amine, insbesondere tertiäre Amine und Pyridine z.B. N,N-Dimethylaminopyridin oder N,N,N',N'-Tetramethyl-1,6,-diaminohexan in Betracht.

Sofern als Base Ammoniak verwendet wird, kann dieser auch in Form einer Ammoniak-freisetzenden Substanz eingesetzt werden. Als Ammoniak-freisetzende Substanz kommen insbesondere basische Ammoniumsalze wie Ammoniumcarbonat, Ammoniumhydrogensulfat oder Ammoniumhydrogencarbonat in Betracht. Letzteres liefert unter für das Aufschmelzen des Polymeren notwendigen Temperaturen sowohl Ammoniak als auch Wasser.

Vorzgusweise wird man Ammoniak oder die Ammoniak-freisetzende Substanz in einer Menge von 1 bis 10 Gew.%, gerechnet als Ammoniak und bezogen auf das Polyalkyl-(halb)metallat einsetzen.

Den Ammoniak bzw. die Ammoniak-freisetzende Substanz kann man gemeinsam mit dem Polyalkyl(halb)metallat oder getrennt davon in die Polymerschmelze einarbeiten. Vorzugsweise arbeitet man jedoch zunächst das Polyalkyl(halb)metallat in die Polymerschmelze ein, bis eine annähernd gleichmäßige Verteilung erreicht ist, und arbeitet dann Ammoniak oder eine Ammoniak-freisetzende Substanz und Wasser ein.

Gemäß einer weiteren Ausführungsform der Erfindung wird die Kondensation durch sog. Umesterungskatalysatoren katalysiert. Hierbei handelt es sich um neutrale, schwach basische oder schwach Lewis-saure, sauerstoffhaltige (Halb)Metallverbindungen mit organischen Resten, die ihrerseits Polyalkyl(halb)metallate bilden können. Hierzu zählen Di-, Tri- oder Tetraalkylmetallate, insbesondere Di-, Tri- oder Tetra-C₂-C₆-alkylmetallate oder Acetate des Zirkons, Zinns, Siliziums, Aluminiums, Zinks, Magnesiums oder des Titans wie Tetraethyltitanat, Tetrabutyltitanat, Tetrabutylstannat, Ethyltriacetoxysilan, Tetrabutylzirkonat und Tetraethylzirkonat, Trialkoxyvanadium(V)oxide (= Trialkylvanadate) wie Vanadium(V)-triisopropoxidoxid (Vanadium(V)-triisopropoxyoxid, VO(OCH(CH₃)₂)), weiterhin Titantrimethylsiloxan, Dialkoxytitan-bis(ethylacetoacetonat), insbesondere Di-C₂-C₆-alkoxytitan-bis(ethylacetoacetonat) wie Titandiisopropoxid-bis(ethylacetoacetonat) sowie Salze des Zinns, Magnesiums, Aluminiums, Zinks, Bleis, Kalziums, Bariums, Strontiums oder Zirkons mit aliphatischen Carbonsäuren wie Di-n-butyldilaurylstannat (Di-n-butylzinndilaurat [CH₃-(CH₂)₁₀COO]₂Sn(n-C₄H₉)₂), Di-n-butylzinndiacetat, Bis(2-ethylhexanoate)zinn(II) (Zinn(II)-2-ethylhexanoat), Zinn(II)-acetat, Magnesium(II)-acetat oder Aluminium(III)-acetat.

Bevorzugte Umesterungskatalysatoren sind Tetra-C₂-C₆-alkylmetallate des Zirkons und des Titans, Tri-C₂-C₆-alkylmetallate des Aluminiums, Tri-C₂-C₆-alkylvanadate sowie Acetate des Magnesiums, des Zinns, des Aluminiums und des Bleis.

Geeignet sind auch Mischungen von Umesterungskatalysatoren mit Brönsted-Säuren oder mit Anhydriden von Brönsted-Säuren, z.B. mit Anhydriden organischer Carbonsäuren wie Essigsäureanhydrid.

Der Einsatz von wasserfreien Katalysatoren bzw. von als Katalysator wirksamen Verbindungen, die unter Ausschluss von Wasser oder einer organischen Carbonsäure bzw. eines Carbonsäureanhydrids ihrerseits nicht mit den Polyalkyl(halb)metallaten in einer Weise reagieren, die einen Einbau des Katalysators in die sich bildende (Halb)metalloxid-Phase bewirken würde, führt zu einer langsamen, kontrollierten Kondensation und erhöht auf diese Weise den Anteil an Segregation des Polyalkyl(halb)metallats. Somit führt der Einsatz solcher Katalysatoren zu einer verstärkten Ausbildung einer dünnen Oberflächenschicht der Polyalkyl(halb)metallat-Phase, die nach Kondensation unter Einfluss von Feuchtigkeit, beispielsweise in Form von Luftfeuchtigkeit oder Wasserdampf, und des zugesetzten Katalysators zur (Halb)metalloxid-Phase reagiert. Solche Katalysatoren können sowohl aus der Gruppe der sauren oder basischen Katalysatoren oder Umesterungskatalysatoren ausgewählt werden. Bevorzugte Beispiele sind Tetraalkylmetallate des Titans oder Zinns wie Tetraethyltitanat, Tetrabutyltitanat oder Tetrabutylstannat

Man kann den Umesterungskatalysator separat oder zusammen mit dem Polyalkyl(halb)metallat in die Polymerschmelze einarbeitet. Vorzugsweise wird man jedoch den Umesterungskatalysator als Mischung mit dem Polyalkyl(halb)metallat einsetzen. Derartige Katalysatoren werden vorteilhafterweise in einer Menge von 0,01 bis 10 Gew.%, insbesondere 0,1 bis 5 Gew.%, bezogen auf das Polyalkyl(halb)metallat eingesetzt.

In einer weiteren Ausführungsform der Erfindung arbeitet man zusammen mit dem Polyalkyl(halb)metallat zusätzlich ein feinteiliges Material mit einer Primärteilchengröße unterhalb 500 nm, insbesondere unterhalb 300 nm in die Polymerschmelze ein. Hierzu wird man vorzugsweise das feinteilige Material in dem flüssigen Polyalkyl(halb)metallat suspendieren und diese Suspension in die Polymerschmelze einarbeiten.

Durch diese Maßnahme erreicht man zum einen eine gleichmäßigere Verteilung des feinteiligen Materials in der Polymermatrix, da Aggregationsvorgänge hierdurch weitgehend oder vollständig vermieden werden können sowie aufgrund der Umhüllung mit dem Polyalkyl(halb)metallat eine bessere Verträglichkeit des feinteiligen Materials mit der Polymermatrix.

Bei dem feinteiligen Material handelt es ich typischerweise um ein oxidisches Material, beispielsweise ein Oxid des Aluminiums, des Siliziums, des Titans, des Zirkons oder des Eisens, um ein exfoliertes Schichtsilikat wie exfoliertes Kaolinit, Smektit, Serpentin, Talk, Muscovit, Montmorillonit, Saponit, Bentonit, Kanemit, Magadiit oder Kenyait. Derartige feinteiligen Materialien sind dem Fachmann z.B. aus der Literatur hinlänglich bekannt (S. S. Ray, M. Okamoto, Prog. Polym. Sci. 28 (2003) 1539; A. Shimojima, D. Mochizuki, K. Kuroda, Chem. Mater. 2001, 13, 3603) und teilweise unter den Handelsbezeichnungen MMT, Bentonite®, Somasif Mei100® oder Cloisite®30B kommerziell verfügbar.

Sofern erwünscht, setzt man das feinteilige Material in einer Menge von 1 bis 80 Gew.-%, insbesondere in einer Menge von 1 bis 50 Gew.-%, bezogen auf das Polyalkyl(halb)metallat, ein.

Die durch das erfindungsgemäße Verfahren erhältlichen Nanoverbundstoffe können durch übliche Formgebungsverfahren wie Spritzgießen, Heißpressen, Tiefziehen, Blasformen und dergleichen zu Formkörpern weiterverarbeitet werden.

Die folgenden Figuren und Beispiele dienen der näheren Erläuterung der Erfindung.
- Figur 1:: Plastogramm während der Compoundierung in Beispiel 1 mit Drehmoment (unterer Graph) und Temperatur (oberer Graph).
- Figur 2:: Transmissionselektronmikroskopische Aufnahmen (2a und 2b) von Schnitten einer gemäß Beispiel 1 hergestellten Spritzgussplatte eines PP-basierten Verbundstoffs.
- figur 3:: Plastogramm während der Compoundierung in Beispiel 3 mit Drehmoment (unterer Graph) und Temperatur (oberer Graph)
- Figur 4:: Rasterelektronmikroskopische Aufnahme (REM) der Oberfläche einer Spritzgussplatte eines PP-basierten Verbundstoffs, hergestellt nach Beispiel 4.
- Figur 5:: Plastogramm während der Compoundierung in Beispiel 5 mit Drehmoment (unterer Graph) und Temperatur (oberer Graph)

### A Analytik:

Durch thermogravimetrische Analyse (TGA) der erfindungsgemäßen Nanoverbundstoffe mittels einer Thermowaage (NETZSCH TG 209, Fa. Netzsch Gerätebau GmbH) wurde die Temperatur des maximalen Masseverlustes (Tₘₐₓ), die Temperatur, bei der 5 % der Gesamtmasse abgebaut sind (T_{5%}) und der sich aus dem Verbrennungsrückstand ergebende SiO₂-Anteil sowohl an Pulvern als auch an den Formkörpern bestimmt.

Die rasterelektronmikroskopischen Aufnahmen (REM) wurden mit einem Zeiss 360 Stereo Scan, die transmissionselektronenmikroskopischen Untersuchungen (TEM) mit einem EM 109 durchgeführt. Beides sind Geräte der Fa. Zeiss NTS.

Die Viskosität wurde mit einem Kapillarviskosimeter (Fa. Viscotek, Germany, Model HB502B) bestimmt.

Die angegebenen Molekulargewichte wurden mittels Größenausschlusschromatographie (SEC) in Chloroform mittels eines modular aufgebauten SEC der Fa. Knauer bestimmt, wobei man zur Erfassung der absoluten Molekulargewichte eine Kalibrierung mit durch Fraktionierung gewonnenen Standards mit enger Molgewichtsverteilung vornimmt.

### B Herstellung der Polyalkyl(halb)metallate

### Herstellungsbeispiel 1 (Polyethoxysiloxan, einstufiges Verfahren)

In einem Reaktionsgefäß, ausgerüstet mit Thermometer, 30 cm Vigreux-Kolonne, Claisen-Destillationsbrücke und Schutzgasanschluss wurden 1041,65 g (5,0 mol) Tetraethoxysilan TEOS, 510,45 g (5,0 mol) Essigsäureanhydrid und 3,17 mL (3,42 g; 0,015 mol) Tetraethyltitanat (Katalysator) in Stickstoffatmosphäre und starkem Rühren auf 130 °C (Ölbadtemperatur) erwärmt, Innerhalb von 7 h destillierten 816,9 g Ethylacetat. Nach Anlegen von Hochvakuum wurden innerhalb von 5 h weitere 73,5 g Destillat erhalten. Das Rohprodukt wurde anschließend einer Aufarbeitung im Dünnschichtverdampfer (DSV) unterzogen, wobei niedermolekulare Bestandteile (wie verbliebenes TEOS) bei einer Temperatur von 150 °C und einer Durchlaufgeschwindigkeit von 50 mL/h im Hochvakuum entfernt wurden. Man erhielt 290 g hochverzweigtes, gelb gefärbtes Polyethoxysiloxan mit einer Viskosität von 17 Pa·s. Das so erhaltene Polyethoxysiloxan enthielt 24,2 Gew. % Silizium. Der Verzweigungsgrad nach Frey (²⁹Si-NMR-spektroskopisch ermittelt) betrug 0,52. Das zahlenmittlere Molekulargewicht Mₙ lag bei 1800 Dalton, das gewichtsmittlere Molekulargewicht M_{w} bei 3600.

### Herstellungsbeispiel 2 (Polybutoxysiloxan)

In einem Reaktionsgefäß mit Kurzweg-Destillationsbrücke und Schutzgasanschluss wurden 50,58 g des Rohproduktes von Poly(ethoxysiloxan) (nicht mit DSV gereinigt), 78,61 g (1,06 mol) Butanol und 0,1 g Tetraethyltitanat unter Stickstoffatmosphäre auf eine Ölbadtemperatur von 130 °C gebracht. Während eines Zeit von 3 h 45 min wurden 40,3 g eines Ethanol/Butanol-Azeotropes destilliert. Das Rohprodukt wurde über Nacht im Hochvakuum von weiteren flüchtigen Bestandteilen befreit. Es wurden 67,1 g einer leicht gelblich gefärbten Flüssigkeit erhalten, die im Dünnschichtverdampfer bei 150 °C/50 mL*h⁻¹ aufgearbeitet wurde. Es wurden 46,8 g einer klaren, öligen Flüssigkeit erhalten. Das so erhaltene Polybutoxysiloxan hatte ein zahlenmittleres Molekulargewicht von 1800 Dalton und eine Viskosität von 17 Pa·s. Der Verzweigungsgrad blieb unverändert bei 0,52.

### Herstellungsbeispiel 3 (Polyethoxy-co-octadecoxysiloxan)

Polyethoxy-co-octadecoxysiloxan wurde in analoger Weise wie Polybutoxysiloxan durch Umsetzung von Polyethoxysilan mit Octanol hergestellt. Es wurden 43,6 g eines farblosen Wachses erhalten mit einem zahlenmittleren Molekulargewicht von 1900 Dalton und einem Schmelzpunkt von ca. 50 °C.

### C Untersuchung der Mischbarkeit von Polyalkoxysitoxanen (PAOS) der Herstellungsbeispiele 1 bis 3 mit thermoplastischen Polymeren wie Polypropylen (PP)

In der Polymerschmelze von PP (NOVOLEN, Basell) wird die Mischbarkeit mit PAOS getestet. Hierzu wird das PAOS in einem Messkneter bei 190°C in kleinen Schritten zu einer PP-Schmelze gegeben und jeweils 3 min. eingearbeitet. Sobald eine dauerhafte Trübung auftritt (Trübungspunkt), ist die Löslichkeitsgrenze erreicht. Die Bestimmung des Trübungspunkts erfolgt visuell bei der PAOS-Zugabe

**Tab. 1: Mischbarkeit von PAOS mit PP**

| PAOS | Löslichkeitsgrenze [Gew.-%] ¹⁾ |
|---|---|
| Poly(ethoxysiloxan) | 0,6 |
| Poly(butoxysiloxan) | 1,6 |
| Poly[(ethoxy-co-octadecoxy)siloxan] | >16 |

| | |
|---|---|
| 1) bezogen auf PP | |

Die Löslichkeit von Poly(ethoxysiloxan) in PP liegt bei 0,6 Gew.-%. Durch die Modifizierung des SiO₂-Precursors ist die Löslichkeit von PAOS in PP kontrollierbar. Mehr als 16 Gew.-% Poly(ethoxy-co-octadecoxy)siloxan können in eine optisch klare PP-Schmelze eingearbeitet werden.

### Beispiele

### Beispiel 1:

35 g PP (NOVOLEN, Basell) wurden in einem handelsüblichen Kneter (Brabender Plastograph W50EHT) bei 35 U*min⁻¹ und 190°C für 5 min aufgeschmolzen. Hierzu gab man kontinuierlich eine Mischung von 3,5 g (10 Gew.-%) Poly(ethoxysiloxan) aus Herstellungsbeispiel 1 und 0,35 g (1 Gew.-%) Tetrabutylorthotitanat. Man knetete die Mischung weitere 30 min. Anschließend wurde die Mischung mittels Spritzguss oder Schmelzpressen zu Formkörpern verabeitet.

| | |
|---|---|
| Tₘₐₓ: | 461 °C |
| T_{5%} : | 433 °C |
| SiO₂ Anteil nach Veraschung: | 7,3 Gew.-% |

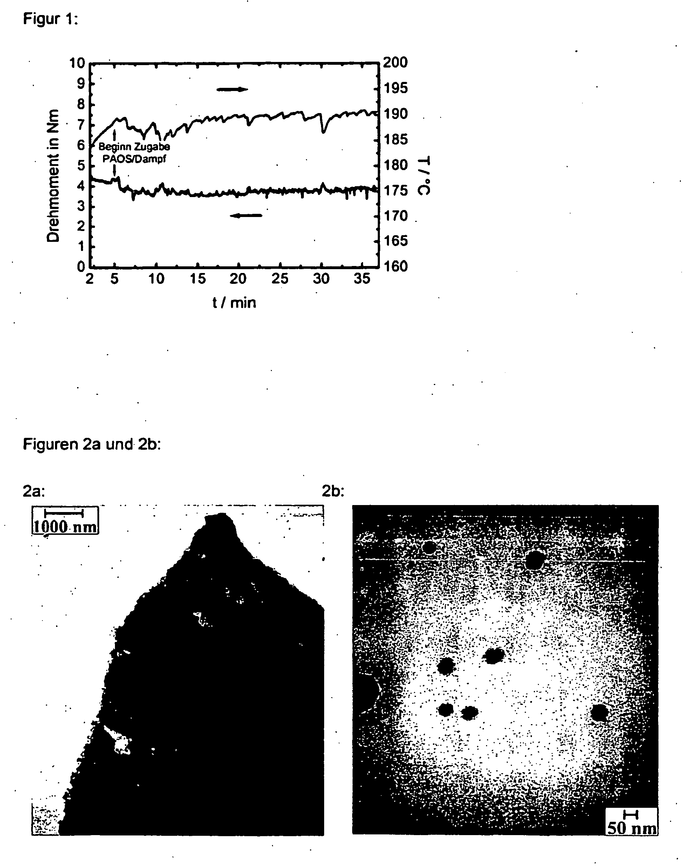

TEM-Untersuchungen an Schnitten einer durch Spritzguss hergestellten Platte aus dem nach Beispiel 1 erhaltenen PP-basierten Verbundstoff zeigen eine gleichmäßige Verteilung von diskreten SiO₂-Partikel (Abbildungen 2a und 2b).

### Beispiel 2:

Analog Beispiel 1 wurden 35 g PP (NOVOLEN, Basell) in einem handelsüblichen Kneter (Brabender Plastograph W50EHT) bei 35 U*min⁻¹ und 190 °C für 5 min aufgeschmolzen. Hierzu gab man kontinuierlich 3,5 g (10 Gew.-%) Poly(ethoxysiloxan) aus Herstellungsbeispiel 1. Nach weiteren 10 min. bei 190 °C gab man 1,75 g (5 Gew.-%) Ammoniumhydrogencarbonat in die Polymerschmelze. Es wurden weitere 25 min geknetet und die Mischung mittels Spritzguss oder Schmelzpressen zu Formkörpern verarbeitet.

| | |
|---|---|
| Tₘₐₓ: | 466 °C |
| T_{5%}: | 348°C |
| SiO₂ Anteil nach Veraschung: | 3,9 Gew.-% |

### Beispiel 3:

3,5 g PP (NOVOLEN, Basell) wurden in einem handelsüblichen Miniextruder (DSM Xplore^{™} 5 cm³ twin-srew Micro-Compounder) bei 200°C aufgeschmolzen. Hierzu gab man kontinuierlich über 5 min. eine Mischung von 0.18 g (5 Gew.-%) Poly(ethoxysiloxan) aus Herstellungsbeispiel 1 und 0.018 g (0,5 Gew.-%) Tetrabutylorthotitanat. Nach weiteren 10 min. Verarbeitungszeit wurde die Mischung entweder mittels Spritzguss direkt oder nach Entnahme aus dem Extruder mittels Schmelzpressen zu Formkörpern verarbeitet.

| | |
|---|---|
| Tₘₐₓ: | 460°C |
| T_{5%}: | 433 °C |
| SiO₂ Anteil nach Veraschung: | 6,2 Gew.-% |

### Beispiel 4:

50 kg PP (HOSTACOM, Basell) wurden in einem handelsüblichen Extruder (ZSK30 der Fa: Werner & Pfleiderer) bei 250 U*min⁻¹ und einer Zylindertemperatur von 210 °C aufgeschmolzen. Hierzu gab man kontinuierlich innerhalb von 6 h eine Mischung von 2,5 kg (5 Gew.-%) Poly(ethoxysiloxans) aus Herstellungsbeispiel 1, gemischt mit 25 g (1 Gew.-%) Tetrabutylorthotitanat . Die Stränge wurde über ein Wasserbad abgezogen und granuliert. Das Granulat wurde später mittels Spritzguss zu Platten verarbeitet.

| | |
|---|---|
| Tₘₐₓ: | 462 °C |
| T_{5%}: | 419°C |
| SiO₂ Anteil nach Veraschung: | 3,8 Gew:% |

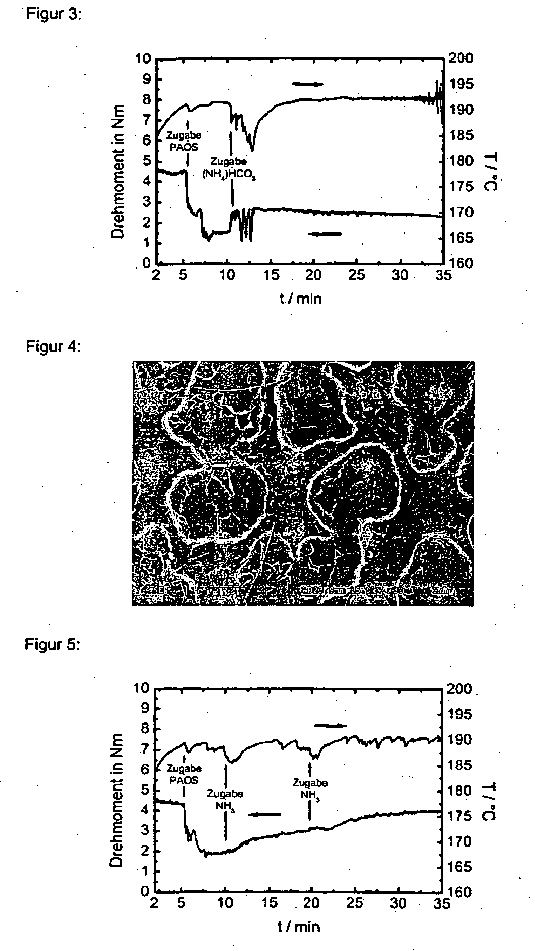

Während der Verarbeitung separierte ein Teil des Poly(ethoxysiloxans) zur Oberfläche und bildete dort nach Kondensation eine geschlossene SiO₂-Schicht aus. REM Untersuchungen (Figur 4) zeigen auf der Oberfläche eine dünne SiO₂-Schicht sowie an Kryobruchkanten innerhalb der Verbundstoffe SiO₂-Partikel.

mittels Energie-Dispersive-Spektrometrie konnte ermittelt werden, dass alle analysierten Elemente gleichmäßig über die Probe verteilt sind.

### Beispiel 5:

35 g PP (NOVOLEN, Basell) wurden in einem handelsüblichen Kneter (Brabender Plastograph W5OEHT)bei 35 U*min⁻¹ und 190 C für 5 min aufgeschmolzen. Hierzu gab man kontinuierlich 3,5 g (10 Gew.%) Poly(ethoxysiloxan) aus Herstellungsbeispiel 1. Während der Compoundierung wurde Wasserdampf aus einem siedenden Wasserbad (Ölbadtemperatur 130 °C) über PTFE-Schläuche zugeführt. Nach 10 min. und nach 20 min. wurden in das Wasserbad jeweils 5 ml einer 25 %igen Ammoniaklösung gegeben. Die Weiterverarbeitung erfolgte mittels Spritzguss und durch Schmelzpressen.

| | |
|---|---|
| Tₘₐₓ: | 457 °C |
| T_{5%}: | 401 °C |
| SiO₂ Anteil nach Veraschung: | 5,1 Gew.% |

Während der Verarbeitung segregierte ein Teil des Polyethoxysilans aufgrund seiner Oberflächenaktivität an die Oberfläche des Kunststoffformkörpers und kondensierte zu einer Schicht von SiO₂-Partikeln. Die Dimensionen der SiO₂ Partikel liegen laut REM-Untersuchungen im Bereich unterhalb 100 nm.

## Patentansprüche

1. . Verfahren zur Herstellung von Verbundwerkstoffen aus wenigstens einem thermoplastischen Polymeren und wenigstens einem in dem Polymer nanodispers verteilten (Halb)metalloxid, umfassend die folgenden Schritte:
i. Einarbeiten wenigstens eines flüssigen Polyalkyl(halb)metallats in eine Schmelze wenigstens eines thermoplastischen Polymeren und
ii. Kondensation des Polyalkyl(halb)metallats in der Polymerschmelze unter Ausbildung einer in dem Polymeren nanodispers verteilten (Halb)Metalloxid-Phase durch Zugabe wenigstens einer die Kondensation katalysierenden Substanz (Katalysator).

2. . Verfahren nach Anspruch 1, wobei der Katalysator unter Lewis-Säuren und Substanzen, welche Lewissäuren freisetzen, ausgewählt ist.

3. . Verfahren nach Anspruch 1, wobei der Katalysator unter Umesterungskatalysatoren ausgewählt ist, die unter Di-, Tri- und Tetraalkylmetallaten des Zirkons, Zinns, Aluminiums, Magnesiums oder Titans, Trialkoxyvanadium(V)-oxiden, Dialkoxytitan-bis(ethylacetoacetonaten) und Salzen des Zinns, Magnesiums, Aluminiums, Zinks, Bleis, Kalziums, Bariums, Strontiums oder Zirkons mit aliphatischen Carbonsäuren ausgewählt sind.

4. . Verfahren nach Anspruch 1, wobei der Katalysator eine Base umfasst

5. . Verfahren nach Anspruch 4, wobei die Base in Kombination mit Wasser eingesetzt wird.

6. . Verfahren nach Ansprüche oder 5, wobei der Katalysator Ammoniak und/oder eine Ammoniak-freisetzen de Substanz umfaßt

7. . Verfahren nach einem der Ansprüche 2 oder 3, wobei man den Katalysator als Mischung mit dem Polyalkyl(halb)metallat einsetzt.

8. . Verfahren nach einem der vorhergehenden Ansprüche, wobei man das flüssige Polyalkyl(halb)metallat in einer Menge von 0,1 bis 50 Gew.-%, bezogen auf das thermoplastische Polymer, einsetzt.

9. . Verfahren nach einem der vorhergehenden Ansprüche, wobei das flüssige Polyalkyl(halb)metallat ein flüssiges Poly[(C₁₋₁₈alkyl)silikat] oder ein modifiziertes, flüssiges Poly[(C₁₋₁₈-alkyl)silikat] ist.

10. . Verfahren nach einem der vorhergehenden Ansprüche, wobei man zusammen mit dem Polyalkyl(halb)metallat zusätzlich ein feinteiliges Material mit einer Primärteilchengröße unterhalb 500 nm zu der Polymerschmelze gibt.

11. . Verfahren nach Anspruch 10, wobei das feinteilige Material in einer Menge von 1 bis 80 Gew.%, insbesondere in einer Menge von 1 bis 50 Gew.%, bezogen auf das Polyalkyl(halb)metallat, eingesetzt wird.

12. . Verfahren nach einem der Ansprüche 10 oder 11, wobei das feinteilige Material ein oxidisches Material ist.

13. . Verbundwerkstoffe aus wenigstens einem thermoplastischen Polymeren und wenigstens einem in dem Polymer nanodispers verteilten (Halb)metalloxid, erhältlich durch ein Verfahren nach einem der vorhergehenden Ansprüche.

14. . Formkörper, erhältlich durch Formgebung eines Verbundwerkstoffs nach Anspruch 13.

15. . Formkörper nach Anspruch 14, der eine Oberflächenschicht aus nanoskaligem (Halb)metalloxid aufweist.

## Claims

1. A process for the preparation of composites of at least one thermoplastic polymer and at least one (semi)metal oxide distributed in the polymer in nanodispersed form, comprising the following steps:
i. introduction of at least one liquid polyalkyl(semi)metalate into a melt of at least one thermoplastic polymer and
ii. condensation of the polyalkyl(semi)metalate in the polymer melt by adding at least one substance catalyzing the condensation (catalyst) forming a (semi)metal oxide phase distributed in the polymer in nanodispersed manner.

2. The process according to claim 1, wherein the catalyst is selected from Lewis acids and substances, which release Lewis acids.

3. The process according to claim 1, wherein the catalyst is selected from transesterification catalysts which are selected from di-, tri-, and tetraalkylmetalates of zirconium, tin, aluminum, magnesium or titanium, trialkoxyvanadium(V) oxides, dialkoxytitanium-bis(ethylacetoacetonates), and salts of tin, magnesium, aluminum, zinc, lead, calcium, barium, strontium or zirconium with aliphatic carboxylic acids.

4. The process according to claim 1, wherein the catalyst comprises a base.

5. The process according to claim 4, wherein the base is used in combination with water.

6. The process according to claim 4 or 5, wherein the catalyst comprises ammonia and/or an ammonia-releasing substance.

7. The process according to any of claims 2 to 3, wherein the catalyst is used as a mixture with the polyalkyl(semi)metalate.

8. The process according to any of the previous claims, wherein the liquid polyalkyl(semi)metalate is used in an amount of from 0.1 to 50 % by weight based on the thermoplastic polymer.

9. The process according to any of the previous claims, wherein the liquid polyalkyl(semi)metalate is a liquid Poly[(C₁₋₁₈-alkyl)silicate] or a modified, liquid poly[(C₁₋₈-alkyl)silicate].

10. The process according to any of the previous claims, wherein a finely divided material with a primary particle size of below 500 nm is additionally introduced to the polymer melt together with the polyalkyl(semi)metalate.

11. The process according to claim 10 wherein the finely divided material is used in an amount of from 1 to 80 % by weight, in particular in an amount of from 1 to 50 % by weight based on the polyalkyl(semi)metalate.

12. The process according to any of claims 10 or 11, wherein the finely divided material is an oxidic material.

13. Composites from at least one thermoplastic polymer and at least one (semi)metal oxide distributed in the polymer in nanodispersed form, obtainable by a process according to any of the previous claims.

14. A molded article, obtainable via molding of a composite according to claim 13.

15. The molded article according to claim 14, which has a surface layer of nanoscale (semi)metal oxide.

## Revendications

1. Procédé de fabrication de matériaux composites à base d'au moins un polymère thermoplastique et d'au moins un oxyde de (semi-)métal nanodispersé dans le polymère, comprenant les étapes suivantes :
i. incorporation d'au moins un (semi-)métallate de polyalkyle liquide dans une masse fondue d'au moins un polymère thermoplastique et
ii. condensation du (semi-)métallate de polyalkyle dans la masse fondue polymère avec formation d'une phase d'oxyde de (semi-)métal nanodispersée dans le polymère par ajout d'au moins une substance (catalyseur) qui catalyse la condensation.

2. Procédé selon la revendication 1, dans lequel le catalyseur est choisi parmi les acides de Lewis et les substances qui libèrent des acides de Lewis.

3. Procédé selon la revendication 1, dans lequel le catalyseur est choisi parmi les catalyseurs de transestérification, qui sont choisis parmi les métallates de di-, tri- et tétraalkyle de zirconium, d'étain, d'aluminium, de magnésium ou de titane, les oxydes de trialcoxyvanadium (V), les bis(éthylacétoacétonates) de dialcoxytitane et les sels d'étain, de magnésium, d'aluminium, de zinc, de plomb, de calcium, de baryum, de strontium ou de zirconium avec des acides carboxyliques aliphatiques.

4. Procédé selon la revendication 1, dans lequel le catalyseur comprend une base.

5. Procédé selon la revendication 4, dans lequel la base est utilisée en mélange avec de l'eau.

6. Procédé selon la revendication 4 ou 5, dans lequel le catalyseur comprend de l'ammoniac et/ou une substance qui libère de l'ammoniac.

7. Procédé selon l'une quelconque des revendications 2 ou 3, dans lequel le catalyseur est utilisé sous la forme d'un mélange avec le (semi)métallate de polyalkyle.

8. Procédé selon l'une quelconque des revendications précédentes, dans lequel le (semi-)métallate de polyalkyle liquide est utilisé en une quantité de 0,1 à 50 % en poids par rapport au polymère thermoplastique.

9. Procédé selon l'une quelconque des revendications précédentes, dans lequel le (semi-)métallate de polyalkyle liquide est un silicate de poly(alkyle en C₁-C₁₈) liquide ou un silicate de poly (alkyle en C₁₋C₁₈) liquide modifié.

10. Procédé selon l'une quelconque des revendications précédentes, dans lequel un matériau finement divisé ayant une taille de particule primaire inférieure à 500 nm est également ajouté à la masse fondue polymère avec le (semi-)métallate de polyalkyle.

11. Procédé selon la revendication 10, dans lequel le matériau finement divisé est utilisé en une quantité de 1 à 80 % en poids, notamment en une quantité de 1 à 50 % en poids, par rapport au (semi-)métallate de polyalkyle.

12. Procédé selon l'une quelconque des revendications 10 ou 11, dans lequel le matériau finement divisé est un matériau oxydique.

13. Matériaux composites à base d'au moins un polymère thermoplastique et d'au moins un oxyde de (semi-)métal nanodispersé dans le polymère, pouvant être obtenus par un procédé selon l'une quelconque des revendications précédentes.

14. Corps moulé, pouvant être obtenu par façonnage d'un matériau composite selon la revendication 13.

15. Corps moulé selon la revendication 14, qui comporte une couche de surface à base d'oxyde de (semi)métal à l'échelle nanométrique.
